# EUROPÄISCHE PATENTANMELDUNG

(11) **EP 0 775 771 A1**
(43) Veröffentlichungstag der Anmeldung: **28.05.1997**
(21) Anmeldenummer: 95810730.2
(22) Anmeldetag: 22.11.1995
(51) Int. Cl.: D06F 93/00, B65G 47/51

(54) **Vorrichtung und Verfahren zum Behandeln von Wäschestücken**

(71) Anmelder: JENSEN AG BURGDORF, CH-3400 Burgdorf (CH)
(72) Erfinder: Jensen, Jesper, CH-3007 Bern (CH); Rauch, Martin, CH-3415 Hasle-Rüegsau (CH)
(74) Vertreter: Wagner, Wolfgang, Dr. Phil., Dipl.-Phys.

(57) **Zusammenfassung**

Eine Vorrichtung (1) zum Behandeln von Wäschestücken weist einen Zuführförderer (2) auf, mit dem die Wäschestücke der Vorrichtung losweise in einer sortierten sequentiellen Folge zuführbar sind. Die Vorrichtung umfasst mehrere Behandlungsstationen (4.1, 4.2, 5), im gezeigten Ausführungsbeispiel Faltstationen. Diese sind Faltautomaten (4.1, 4.2) oder manuell bediente Falttische (5), die zum Durchführen von gleichzeitigen Faltoperationen an den Wäschestücken parallel zueinander angeordnet sind. Es ist im weiteren ein Ausgabeförderer (6) vorhanden, mit dem die gefalteten Wäschestücke (3.4) weiterförderbar sind. Jeder Faltstation (4.1, 4.2, 5) ist ein Zwischenförderer (7) zugeordnet, der als nicht dauernd umlaufender Bandförderer ausgebildet ist. Jeder Zwischenförderer dient als Zwischenspeicher, worin die in der entsprechenden Faltstation gefalteten Wäschestücke speicherbar und zu einem gewünschten, von einem nicht sichtbaren Rechnersystem gesteuerten Zeitpunkt dem Ausgabeförderer (6) zuführbar und übergebbar sind. Anhand eines Kennungscodes, den das Wäschestück selbst und/oder ein Transportbügel enthalten kann und mindestens einer Einrichtung (9, 11) zum Lesen des Kennungscodes sowie dem genannten Rechnersystem sind die Zwischenförderer derart steuerbar, dass, obwohl die Faltzeiten an den einzelnen Faltstationen unterschiedlich lang sind, die gefalteten Wäschestücke losweise sortiert an den Ausgabeförderer übergebbar sind. Die fertig gefalteten Wäschestücke gelangen auf diese Art losweise sortiert zu einer Auslieferungsstelle. Ein manuelles Sortieren der Wäschestücke unmittelbar vor der Auslieferung kann dadurch entfallen.

## Beschreibung

Die vorliegende Erfindung bezieht sich auf eine Vorrichtung zum Behandeln von Wäschestücken gemäss dem Oberbegriff des Patentanspruches 1, auf eine Wäschebehandlungsanlage gemäss dem Oberbegriff des Patentanspruches 7 sowie auf ein Verfahren zum Behandeln von Wäschestücken gemäss dem Oberbegriff des Patentanspruches 8.

Anfallende Wäsche von Hotels, Spitälern oder Betrieben wird immer häufiger in dazu spezialisierten Firmen gepflegt, insbesondere gewaschen, geglättet und gefaltet. Diese spezialisierten Wäschereifirmen sind bestrebt, die bei ihnen anfallende Arbeit zunehmend automatisch auszuführen. Dazu werden dort sogenannte Wäschebehandlungsanlagen eingerichtet, in welchen die Wäsche längs einer Behandlungsstrasse mit einem Fördersystem nacheinander mehreren Arbeitsstationen zum Durchführen unterschiedlicher Behandlungen zugeführt werden. Typische Arbeitsstationen sind Waschmaschinen, Schleudern, Mangeln für Flachwäsche wie Leintücher, Waschmaschinen, Tumbler, Faltstationen für Frotteewäsche und Waschmaschinen, Tunnelfinisher und Faltstationen für Formteile wie Berufskleider, Kittel, Blusen, etc.

Bei der Anlieferung von Wäschestücken werden diese vorerst einmal sortiert, in Flachwäsche, Frotteewäsche und Formteile, und, falls nicht bereits gekennzeichnet, mit einem Kennzeichen, beispielsweise einem Kennungscode, wie einem Strichcode, versehen, anhand welchem der Eigentümer eines jeden Wäschestückes jederzeit festgestellt werden kann. Die Wäschestücke werden dann gewaschen und gelangen je nach der Art der Wäschestücke gemäss der vorgängigen Aufzählung zu weiteren Arbeitsstationen. Hier wird, lediglich als Beispiel, die Weiterbehandlung von Formwäsche betrachtet. Derartige Wäschestücke gelangen nach dem Verlassen der Waschmaschine zu einer Aufgabestation, wo sie stückweise an Transportmittel befestigt, insbesondere auf Transportbügel aufgehängt werden. Die Transportbügel können einen Datenträger enthalten, vorzugsweise in der Form eines Chips oder eines magnetisch oder optisch wirkenden Trägers. An der Aufgabestation erfolgt, wenn vorhanden, die Codierung dieses Datenträgers. So kann beispielsweise der genannte Kennungscode auf dem Wäschestück mit dem Code auf dem Datenträger verknüpft werden, oder der Eigentümer des Wäschestückes kann direkt im Code des Datenträgers enthalten sein. Es können dem Wäschestück auch weitere Informationen zu dessen Behandlung in den folgenden Arbeitsstationen mitgegeben werden. Selbstverständlich ist es möglich, anstelle einer individuellen Codierung auch bereits vorcodierte Bügel zu verwenden. Die mit dem Kennungscode am Wäschestück oder auf dem Transportbügel einem jeden Wäschestück zugeteilten Informationen werden in einem Rechnersystem festgehalten.

Das am Transportbügel befestigte Wäschestück wird nun einem Fördersystem übergeben, mit welchem das Wäschestück zuerst durch einen Tunnelfinisher geführt wird. Dort wird das Wäschestück mittels einer Dampfbehandlung und Heissluftbehandlung knitterfrei gemacht und getrocknet.

Die auf dem Fördersystem in einer beliebigen seriellen Folge hängenden Wäschestücke gelangen nach dem Tunnelfinisher in eine Sortierstation. Dort werden sie losweise sortiert, d.h., alle Wäschestücke des Anlieferungsloses eines Kunden werden zusammengeführt. Die Sortierangaben liefern der Kennungscode und das Rechnersystem, in welchem die Informationen verarbeitet werden und gespeichert sind. Die Wäschestücke verlassen die Sortierstation in einer sequentiellen Folge, sortiert nach dem Eigentümer. Alle Wäschestücke eines Anlieferungsloses sind auf dem Fördersystem nun hintereinander angeordnet.

Der nächste Arbeitsschritt für die Formwäsche ist das Falten. Obschon auch hier die Tendenz dazu geht, möglichst alle Formwäsche in Faltautomaten möglichst ohne manuelles Dazutun zu falten, gibt es leider immer noch Wäschestücke, die sich in Automaten nicht oder nicht genügend gut falten lassen und deshalb manuell auf einem Falttisch gefaltet werden müssen. Es kann auch vorkommen, dass Kunden für eine bestimmte Art von Wäschestücken Faltvorschriften erlassen, die auf dem Automaten nicht durchführbar sind. Solche Wäschestücke müssen deshalb auch von Hand gefaltet werden. In Wäschebehandlungsanlagen gemäss dem hier beschriebenen Beispiel sind als Faltstation deshalb zweckmässigerweise mindestens ein Faltautomat und ein Falttisch vorhanden. Je nach Grösse und Leistungsfähigkeit der Anlage sind mehrere parallel zueinander angeordnete Faltautomaten und mehrere Falttische vorzusehen. An den Faltautomaten und an den Falttischen werden Faltoperationen an den Wäschestücken gleichzeitig parallel zueinander ausgeführt. Da Wäschestücke in den Faltautomaten wesentlich schneller gefaltet werden können als dies durch die Falterinnen an den Arbeitstischen der Fall ist, ergibt sich zwangsläufig, dass die vorgängig sortierten Wäschestücke, die nach den Faltautomaten oder nach den Falttischen einem Förderband, das zu einer Auslieferstation führt, zugeführt werden, nicht mehr nach dem Los eines Eigentümers sortiert sind. Sie sind wieder durcheinander und müssen unmittelbar vor der Auslieferung erneut sortiert werden. Dies bedeutet einen zusätzlichen Arbeits- und Zeitaufwand.

Es ist deshalb die Aufgabe der vorliegenden Erfindung, eine Vorrichtung und ein Verfahren zum Behandeln von Wäschestücken zu schaffen, mit dem das Auftreten des vorgenannten Problemes vermieden werden kann. Es soll erreicht werden, dass mit der geschaffenen Vorrichtung und dem Verfahren Wäschestücke, die durch unterschiedlich lange Behandlungszeiten an mehreren parallel zueinander angeordneten Behandlungsstationen einer Arbeitsstation in ihrer Sortierfolge durcheinandergeraten, die Arbeitsstation dennoch in einer gewünschten sortierten Folge verlassen.

Gelöst wird diese Aufgabe mit einer Vorrichtung gemäss dem Oberbegriff des Patentanspruches 1, welche zusätzlich die kennzeichnenden Merkmale dieses Anspruches aufweist. Das Verfahren gemäss dem Oberbegriff gemäss dem Patentanspruch 8 weist erfindungsgemäss die Merkmale des kennzeichnenden Teiles dieses Anspruches auf. Die Vorrichtung wird zweckmässigerweise in einer Wäschebehandlungsanlage eingesetzt, welche die Merkmale des Patentanspruches 7 aufweist.

Obschon vorgängig das zu lösende Problem am Beispiel von parallel zueinander angeordneten Faltautomaten oder Falttischen geschildert ist, kann die Vorrichtung überall dort eingesetzt werden, wo Wäschestücke einer Arbeitsstation in einer sequentiellen Reihe zugeführt und in einer sequentiellen Reihe auch wieder abgeführt werden, wobei der serielle Fluss in der betreffenden Arbeitsstation auf mehrere parallel zueinander arbeitende Behandlungsstationen aufgeteilt und nach dem Behandeln wieder zusammengefasst wird und wobei die Behandlungszeiten für die Wäschestücke an den einzelnen Behandlungsstationen unterschiedlich lang ist.

Damit mit der erfindungsgemässen Vorrichtung das vorgenannte nachteilige Nachsortieren oder erneute Sortieren der Wäschestücke nicht mehr erfolgen muss, hat man vorgesehen, bei Arbeitsstationen, die mehrere parallel zueinander angeordnete Behandlungsstationen erfordern, um eine anfallende bestimmte Behandlungsoperation an mehreren Arbeitsplätzen gleichzeitig ausführen zu können, wobei die Behandlungszeit an den einzelnen Arbeitsplätzen unterschiedlich sein kann, Wäschespeichermittel einzuführen. Es ist dabei pro Behandlungsstation ein Wäschespeichermittel vorhanden, in dem die behandelten Wäschestücke in einer seriellen Folge zwischengespeichert werden können. Die Wäschespeichermittel sehen kein Umsortieren der Wäsche vor, sondern sie arbeiten nach dem FIFO (first in - first out) Prinzip, d.h., die Wäschestücke werden aus dem Wäschespeichermittel in der gleichen Reihenfolge ausgegeben, wie sie auch eingegeben worden sind. Als Wäschespeichermittel drängt sich demzufolge ein Förderer für gefaltete Wäschestücke, vorzugsweise ein Bandförderer, auf. Jedes Wäschespeichermittel ist zwischen einem Ausgang der Behandlungsstation, welcher das entsprechende Wäschespeichermittel zugeordnet ist, und einem Weiterförderer, auf den alle Wäschestücke von den einzelnen Wäschespeichermitteln ausgegeben werden können, angeordnet. Der Weiterförderer ist dafür besorgt, dass die in den vorgenannten Behandlungsstationen behandelten Wäschestücke zur nächsten Arbeitsstation geführt werden. Durch eine geeignete Steuerung der Wäschespeichermittel kann nun erreicht werden, dass mit der Ausgabe der Wäschestücke eines bestimmten Wäscheloses, welche Wäschestücke in verschiedenen Wäschespeichermitteln enthalten sein können, erst dann begonnen wird, wenn alle Wäschestücke eines vorangehenden Wäscheloses bereits ausgegeben worden sind, und wenn durch geeignete Mittel festgestellt worden ist, dass alle Wäschestücke des neuen Wäscheloses nacheinander auf den Weiterförderer ausgebbar sind.

Damit diese Feststellung möglich ist, müssen einerseits die Wäschestücke, die zu einem bestimmten Los bzw. einem bestimmten Eigentümer zugeordnet sind, mit einer bestimmten Bezeichnung bzw. einem Kennungscode verknüpft sein. Andererseits müssen Einrichtungen zum Ausgeben und Einrichtungen zum Lesen des Kennungscodes vorhanden sein und muss die Steuereinrichtung so aufgebaut sein, dass diese anhand von empfangenen Kennungscodes bestimmen kann, welche Wäschestücke zu einem Wäschelos gehören und in welchen Wäschespeichermitteln welche Wäschestücke des Wäscheloses zwischengespeichert sind. Eine derartige Aufgabe wird heutzutage zweckmässigerweise mit einer als Rechner aufgebauten Steuereinrichtung gelöst.

Die Kennungscodes können direkt am Wäschestück angebracht sein oder sie können an einem Transportmittel, mit denen die Wäschestücke der Vorrichtung zugeführt werden, vorhanden sein. Es ist ebenfalls denkbar, dass Kennungscodes sowohl auf dem Wäschestück sowie am Transportmittel vorhanden und im Rechner miteinander verknüpft sind. Als Kennungscode eignet sich grundsätzlich jeder maschinenlesbare Code. Zweckmässigerweise werden heute dazu jedoch Strichcodes oder Punktcodes eingesetzt. Es sind jedoch ebenfalls Datenträger in Chipform oder magnetische oder optisch wirkende Datenträger denkbar, in denen die Codes gespeichert sind.

Ein typisches Anwendungsgebiet der erfindungsgemässen Vorrichtung sind Faltstationen in einer Wäschebehandlungsanlage, insbesondere für Formteile wie Berufskleider, Blusen, Hemden, Kittel, etc. Dort werden die Wäschestücke mit einem Zuführförderer der erfindungsgemässen Vorrichtung zugeführt. Die Wäschestücke sind im geschilderten Ausführungsbeispiel mit einem Transportmittel verbunden bzw. hängen auf einem Transportbügel. Der Zuführförderer ist ausgerüstet, um die Transportbügel zu transportieren. Sowohl am Transportbügel als auch an den Wäschestücken können Datenträger dauernd oder temporär angebracht sein, in oder auf denen Kennungscodes enthalten sind. Die einzelnen Behandlungsstationen in diesem Ausführungsbeispiel sind Faltautomaten oder manuell bediente Falttische. Die Faltautomaten können Vollautomaten oder Halbautomaten sein. Bei den ersteren erfolgt das Abbügeln und Eingeben an die Maschine automatisch, bei den zweiten manuell. Dort erfolgt lediglich das Falten automatisch. Bei den Falttischen erfolgen das Abbügeln und das Falten solcher Wäschestücke manuell, die zum automatischen Falten nicht geeignet sind oder die eine ganz bestimmte Faltung nach Kundenwunsch aufweisen sollen. Als Wäschespeichermittel haben sich in diesem bevorzugten Ausführungsbeispiel Bandförderer als vorteilhaft erwiesen, welche sich von den Ausgängen der Behandlungsstationen bis zum Weiterförderer erstrecken. Der Weiterförderer ist für den geschilderten Anwendungsfall, dann ein Ausgabeförderer, auch ein Bandförderer, der die gefalteten Wäschestücke losweise sortiert, einer Auslieferstation zuführt.

In einem Ausführungsbeispiel, wo die erfindungsgemässe Vorrichtung in einer Wäschebehandlungsanlage eingesetzt ist, ist es zweckmässig, dass die genannte Steuereinrichtung ein Teil eines zentralen Rechnersystemes ist und dass der Zuführförderer ein Teil eines Fördersystemes ist, welches die einzelnen Arbeitsstationen der Wäschebehandlungsanlage operationell miteinander verbindet.

Anhand von Figuren ist im folgenden ein bevorzugter Aufbau der Vorrichtung und deren Funktionsweise beispielsweise näher beschrieben. Es zeigen
Fig. 1 den schematischen Aufbau einer Wäschebehandlungsanlage, in welche die erfindungsgemässe Vorrichtung integriert ist,
Fig. 2 eine schematische Darstellung der erfindungsgemässen Vorrichtung,
Fig. 3 einen Teil der Vorrichtung gemäss der Fig. 2, wo lediglich die Ausgabeseite für die Wäschestücke dargestellt ist, wobei die Ausgabereihenfolge von behandelten Wäschestücken ersichtlich ist, und
Fig. 4 die Anordnung der Kennungscodes an einem Wäschestück und/oder an einem Transportbügel.

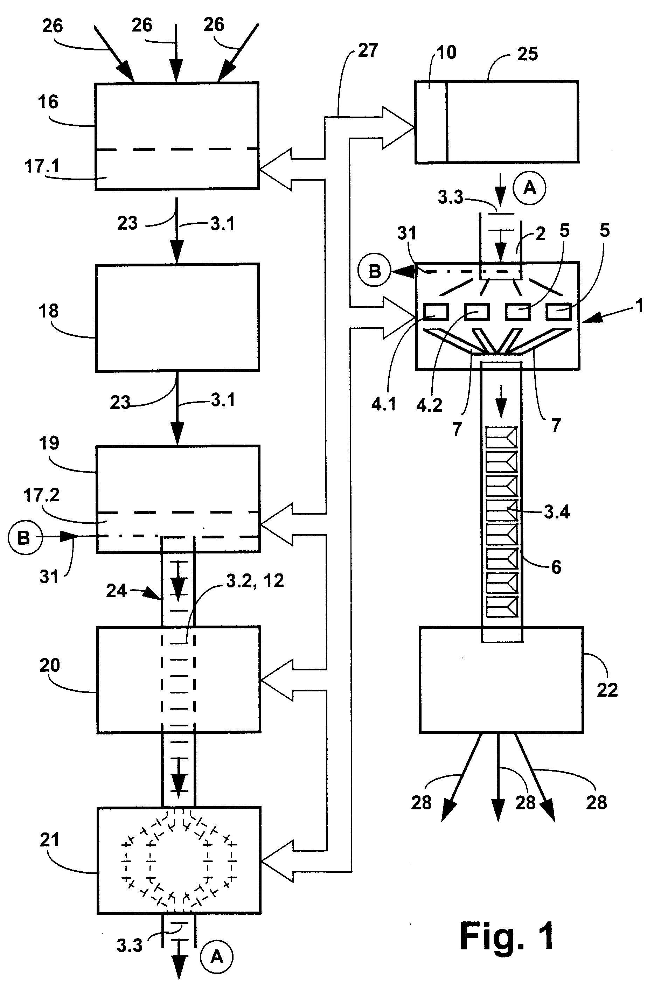

In der Fig. 1 ist eine Wäschebehandlungsanlage dargestellt, in welche die erfindungsgemässe Vorrichtung 1 integriert ist. Das dargestellte Beispiel zeigt die Arbeitsstationen 16, 17.1, 18, 19, 17.2, 20, 21, 1 und 22 einer Wäschebehandlungsanlage, die zum Behandeln von Wäscheformteilen, wie Berufskleider, Blusen, Kittel, etc., geeignet ist. Mit 16 ist dabei eine Anlieferstation gekennzeichnet, an welche einzelne Wäschelose 26 angeliefert werden. Als Wäschelos ist dabei bereits vorsortierte Wäsche eines Kunden zu verstehen, welche lediglich noch die Wäscheformteile umfasst, wobei Flachwäsche wie Leintücher oder Frotteewäsche bereits aussortiert sind und anders aufgebauten, hier nicht näher beschriebenen Wäschebehandlungsanlagen zugeführt werden. Die angelieferten Wäscheformteile können insbesondere von Institutionen, wie Spitälern, die derartige Wäschestücke periodisch behandeln lassen, bereits mit einem Kennungscode versehen sein, der beispielsweise in einem am Wäschestück angebrachten Chip enthalten sein kann. Andernfalls können die angelieferten Wäschestücke in der Anlieferstation mit einem Kennungscode versehen werden, in welchem die Zugehörigkeit zum Wäschelos und eine Verknüpfung mit dem Eigentümer enthalten sein kann. Ein derartiger Kennungscode kann beispielsweise als Barcode, Punktcode oder als Code in einem anzubringenden Chip oder magnetischen oder optischen Datenträger gespeichert werden. In einer ersten Codierstation 17.1 werden dabei die Code vergeben und gleichzeitig in einem zentralen Rechnersystem 25 festgehalten.

Die Datenübertragung zwischen dem zentralen Rechnersystem und den einzelnen genannten Arbeitsstationen erfolgt über ein Bussystem, das in der Figur mit 27 gekennzeichnet ist.

Die mit einem Kennungscode gekennzeichneten Wäschestücke 3.1 werden nun mit einer geeigneten Fördereinrichtung 23 einer weiteren Arbeitsstation 18, einer Wascheinrichtung oder Waschmaschine, zugeführt und dort gewaschen. Nach dem Waschvorgang gelangen die Wäschestücke 3.1 mit einer weiteren geeigneten Fördereinrichtung 23 zur nächsten Arbeitsstation 19 einer sogenannten Aufgabe- oder Aufbügelstation. Die Wäscheformteile werden nun an Transportbügel 12 aufgehängt und vor der Übergabe an ein Fördersystem 24 in einer zweiten Codierstation 17.2, welche der Aufbügelstation 19 zugeordnet ist, mit einem weiteren Kennungscode versehen. Dieser ist vorteilhafterweise in oder auf einem Datenträger, der am Transportbügel angebracht ist, gespeichert. Dieser zweitgenannte Kennungscode kann eine Verknüpfung Transportbügel/Wäschestück und er kann Informationen für die weitere Behandlung des Wäschestückes enthalten. Ebenfalls kann darin die Information des erstgenannten Kennungscodes ebenfalls enthalten sein oder es kann vorgesehen sein, dass der Eigentümer des Wäschestückes erst bei dieser zweiten Codierstelle eingegeben wird, dann nämlich, wenn die Wäschestücke auch ohne Kennungscode eindeutig einem bestimmten Kunden zugeordnet werden können. In diesem Falle ist das Anbringen eines Kennungscode am Wäschestück in der ersten Codierstelle 17.1 nicht erforderlich. Die Kennungscode werden wiederum, wie bereits gesagt, über das Bussystem 27 dem zentralen Rechnersystem 25 zugeführt und dort verarbeitet und gespeichert.

Die nun auf Transportbügeln 12 hängenden Wäschestücke 3.2 werden mit einem Fördersystem 24, eines hinter dem anderen aber losweise durcheinander, der weiteren Arbeitsstation 20, einem Tunnelfinisher zugeführt. Dort werden die Wäschestücke zum Knitterfreimachen und zum Trocknen einer Dampf- und Heissluftbehandlung unterzogen. Es ist denkbar, dass am Eingang des Tunnelfinishers 20 eine nicht dargestellte Einrichtung zum Lesen des Kennungscodes vorhanden ist, womit die Dampf- und/oder Heissluftbehandlung je nach Ausführung des Tunnelfinishers dem Wäschestück angepasst werden könnte. Die entsprechende Steuerung des Tunnelfinishers würde in diesem Fall ab dem zentralen Rechnersystem 25 über das Bussystem 27 erfolgen.

Der Tunnelfinisher 20 ist eine Durchlaufstation. Der Ausgang des Tunnelfinishers ist mit einer Sortiereinrichtung 21 verbunden. Dort werden die Wäschestücke anhand des Kennungscodes, welcher gelesen wird, losweise sortiert. Dazu wird das Fördersystem 24, wie dies lediglich symbolisch gezeichnet ist, über ein Weichensystem im wesentlichen in mehrere parallele Pfade aufgesplittet, welche am Ausgang der Fördereinrichtung wieder zusammengefasst sind. Der Sortiervorgang wird vom zentralen Rechnersystem 25 gesteuert. Die Funktion einer Sortiereinrichtung ist allgemein bekannt und ist deshalb hier nicht weiter beschrieben.

Die gewaschenen, knitterfreien und trockenen Wäschestücke 3.3 verlassen die Sortiereinrichtung 21 auf den Transportbügeln 12 hängend, wiederum in einer sequentiellen Folge, jedoch wäschelosweise sortiert. Alle Wäschestücke eines angelieferten Wäscheloses sind nun im Fördersystem 24 hintereinanderliegend angeordnet. Sie werden in dieser Reihenfolge der erfindungsgemässen Vorrichtung 1 zugeführt. Das Fördersystem 24 für die Transportbügel 12 endet hier gekennzeichnet als Zuführförderer 2. Im gezeigten Beispiel ist die erfindungsgemässe Vorrichtung eine Vorrichtung zum Falten bzw. Zusammenlegen der Wäscheformteile. Die Vorrichtung 1 umfasst Faltautomaten 4.1, 4.2, manuell bediente Falttische 5 und Wäschespeichermittel 7 in der Form von Bandförderern, die je eine Funktion als Zwischenspeicher oder Zwischenförderer ausführen. Die dieser Arbeitsstation angelieferten Wäschestücke werden, vom zentralen Rechnersystem 25 anhand des Kennungscodes gesteuert, den einzelnen Behandlungsstationen 4.1, 4.2 und 5 zugeführt. Sie werden vor dem Falten abgebügelt. Mit 31 ist lediglich symbolisch der Rückführweg der leeren Transportbügel zur Aufbügelstation 19 gekennzeichnet. Nach dem Falten der einzelnen Wäschestücke an den parallel zueinander angeordneten Faltstationen werden die Wäschestücke den Zwischenförderern 7 übergeben, welche ihrerseits mit einer Steuereinrichtung 10, welche in diesem Beispiel im zentralen Rechnersystem 25 enthalten ist, derart gesteuert sind, dass die Ausgabe der gefalteten Wäschestücke 3.4 auf einen Weiterförderer 6, in diesem Fall einen Ausgabeförderer 6, losweise sortiert erfolgt. Dies, obschon die Faltoperationen an den einzelnen Faltstationen unterschiedlich lange dauern kann und die Wäschestücke eines Loses unregelmässig auf die einzelnen Faltstationen haben verteilt sein können. Eine genauere Beschreibung des Aufbaues und des Funktionierens der erfindungsgemässen Vorrichtung 1 erfolgt weiter hinten.

Die gefalteten Wäscheformteile 3.4 werden über den Ausgabeförderer 6 losweise hintereinander einer Wäscheausgabestation 22 zugeführt und von dort, wie dies durch die Pfeile mit dem Bezugszeichen 28 lediglich symbolisch angedeutet ist, losweise versandt.

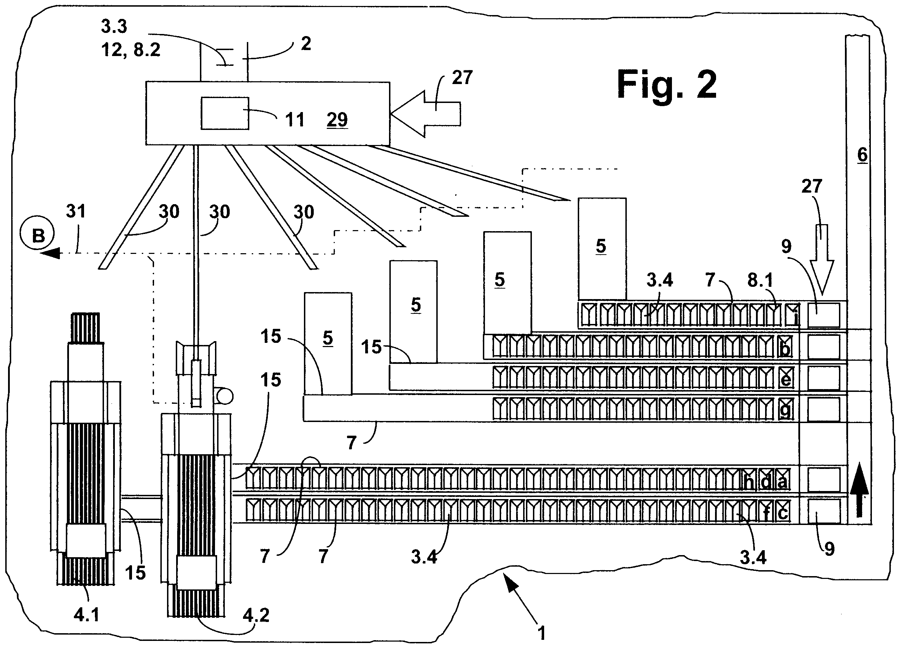

In der Fig. 2 ist die erfindungsgemässe Vorrichtung 1 ausführlicher dargestellt. Es ist mit 4.1 ein Faltautomat sichtbar, bei dem die Wäschestücke 3.3 manuell vom Bügel entfernt und manuell in den Faltautomaten eingegeben werden. Mit 4.2 ist eine vollautomatische Faltstation dargestellt, wo die Abbügelung und die Eingabe der Wäschestücke automatisch erfolgt. Mit 5 sind Falttische gezeichnet, wo die Wäschestücke in manueller Arbeit gefaltet werden. Von jeder Faltstation 4.1, 4.2 und 5 erstreckt sich von einem Ausgang 15 bis zum Weiter- oder Ausgabeförderer 6 ein als Wäschespeichermittel ausgebildeter Zwischenförderer 7. Dies ist vorzugsweise ein Bandförderer, auf dem die gefalteten Wäschestücke 3.4 eins nach dem anderen angeordnet sind. Die Zwischenförderer 7 dienen als Zwischenspeicher für die gefalteten Wäschestücke 3.4. Diese Bandförderer sind nicht kontinuierlich angetrieben, sondern werden, gesteuert durch die früher beschriebene Steuereinrichtung 10, nur zyklisch zum Vorschieben eines einzelnen Wäschestückes 3.4 eingeschaltet.

Die Zuführung der Wäschestücke zur Vorrichtung 1 erfolgt über den Zuführförderer 2. Die am Transportbügel 12 hängenden, gewaschenen, knitterfreien und getrockneten Wäschestücke 3.3 werden in einer sequentiellen Folge losweise zugeführt. Die Wäschestücke 3.3 gelangen vorerst in eine Verteileinrichtung 29. Dort ist eine Einrichtung 11 zum Lesen des Kennungscodes 8.2 am Transportbügel 12 vorhanden. Vom hier nicht sichtbaren Rechnersystem wird die Verteileinrichtung 29 über das Bussystem 27 anhand des gelesenen Kennungscodes derart gesteuert, dass die einzelnen Wäschestücke 3.3 über Teilförderer 30 der jeweiligen geeigneten oder freien Faltstation 4.1, 4.2, 5 zugeführt werden. Die auf die einzelnen Faltstationen verteilten Wäschestücke 3.3 werden nun dort in der Reihenfolge wie sie anfallen gefaltet und an den zugeordneten Zwischenförderer 7 ausgegeben. Das Rechnersystem weiss anhand des gelesenen Codes am Transportbügel und der vergebenen Faltstation die Reihenfolge der einzelnen Wäschestücke auf jedem der Zwischenförderer 7. Ebenfalls weiss das Rechnersystem auf welchem oder auf welchen Zwischenförderer 7, die einem bestimmten Wäschelos zugeordneten Wäschestücke sind.

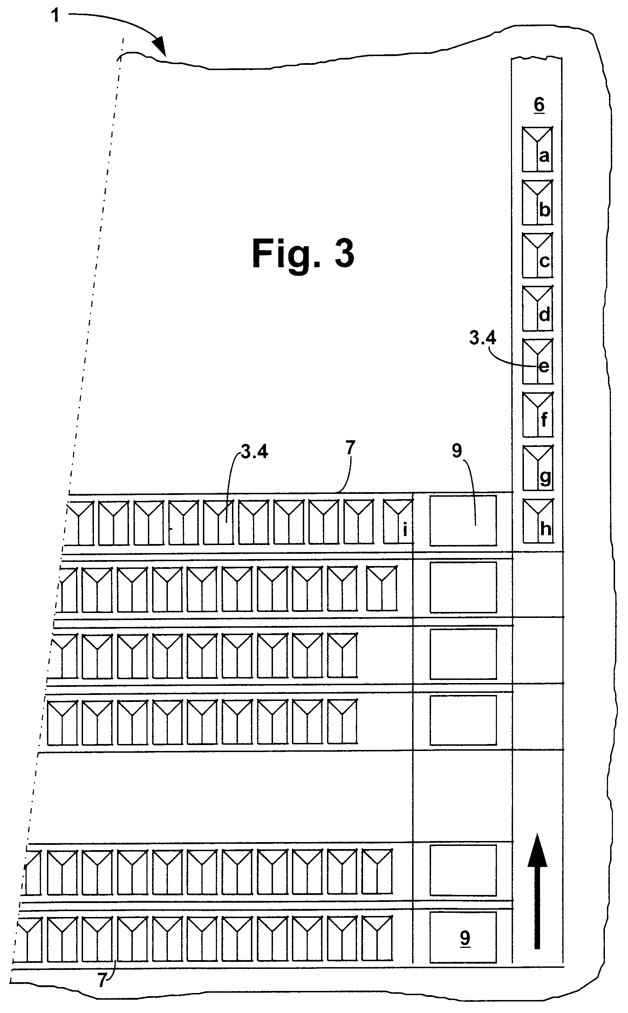

Im gezeigten Ausführungsbeispiel sind beispielsweise neun Wäschestücke 3, 4 eines Wäscheloses, die mit a, b, c, d, e, f, g, h und i bezeichnet sind, in sechs Zwischenförderern 7 enthalten. Ein vorhergehendes Wäschelos ist vollständig ausgegeben und das neue Wäschelos a - i steht unmittelbar am Ausgang der Zwischenförderer 7 derart an, dass sie nacheinander auf den als umlaufenden Bandförderer ausgeführten Ausgabeförderer 6 ausgegeben werden können. Am Ausgang jedes Zwischenförderers 7 ist eine weitere Einrichtung 9 zum Lesen des auf den gefalteten Wäschestücken 3.4 selbst angebrachten Kennungscodes 8.1 enthalten. Dazu werden die vordersten Wäschestücke der Zwischenförderer 7 unter die weiteren Leseeinrichtungen 9 vorgeschoben. Die gelesenen Kennungscodes werden über das Bussystem 27 dem hier nicht sichtbaren Rechnersystem übermittelt. Dieses kann nun die Ausgabe der Wäschestücke auf den Ausgangsförderer 6 so steuern, dass diese nicht nur losweise sondern in einer ganz bestimmten Reihenfolge innerhalb des Loses, nämlich a, b, c, d, e, f, g, h, i, wie dies in der Figur 3 sichtbar ist, auf den Ausgangsförderer 6 gelangen.

Wird längs dem Behandlungsweg der Wäschestücke ein Wäschestück aus der Behandlungsstrasse entfernt, weil es beispielsweise defekt ist und genäht werden muss, so werden bei der Entfernung die Kennungscodes entweder auf dem Transportbügel und/oder auf dem Wäschestück gelesen und dem Rechnersystem übermittelt. Somit weiss der Rechner auch, ob am Ausgang der Zwischenförderer 7 ein Wäschelos komplett ist oder ob einzelne Wäschestücke daraus fehlen, auf die nicht gewartet werden muss. Fehlt ein Wäschestück, obschon es nicht ordnungsgemäss ausgebucht worden ist, so stoppt der Ausgabeförderer 6 und es wird vom Rechnersystem eine Warnmeldung ausgegeben.

Die weiteren Einrichtungen 9 zum Lesen der Kennungscodes 8.1 dienen eigentlich mehr dem Kontrollzweck. Alleine mit der Leseeinrichtung 11 ist die verlangte Steuerung der Zwischenförderer 7 möglich. Vorausgesetzt ist allerdings, dass an den einzelnen Faltstationen 4.1, 4.2, 5 die Wäschestücke 3.3 in der Reihenfolge gefaltet werden, wie sie zugeführt werden.

Die Verteileinrichtung 29 muss nicht unbedingt automatisiert sein. Es kann auch eine manuell bediente Verteileinrichtung vorgesehen sein. Da das Rechnersystem die Anlieferreihenfolge der Wäschestücke 3.3 beim Zuführförderer 2 kennt, wäre im letzteren Fall die Leseeinrichtung 11 nicht notwendig. Dem Rechnersystem müsste jedoch von der Bedienperson der Verteileinrichtung 29 mitgeteilt werden, wie die einzelnen Wäschestücke 3.3 auf die einzelnen Faltstationen 4.1, 4.2, 5 verteilt worden sind Eine folgerichtige Ausgabe auf den Ausgabeförderer wäre auch so möglich. Dies insbesondere dann, wenn es Wäschestücke gibt, die wie vorgängig erwähnt, keinen eigenen Kennungscode 8.1 enthalten.

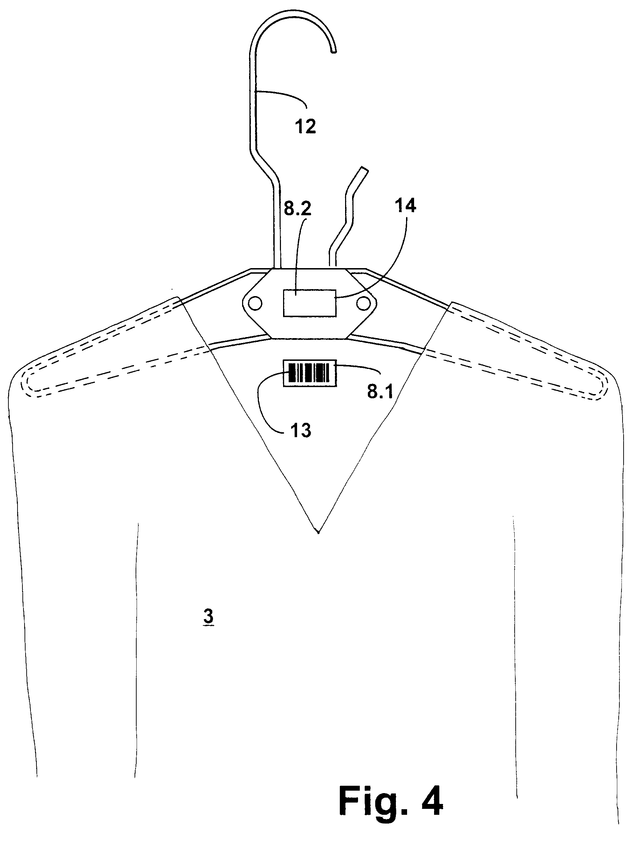

In der Fig. 4 ist ein auf einem Transportbügel 12 aufgehängtes Wäschestück 3 dargestellt. Am Halsausschnitt des Wäschestückes ist beispielsweise auf einem Datenträger ein Strichcode 13 enthalten, welcher den Kennungscode 8.1 darstellt, mit welchem das Wäschestück selbst gekennzeichnet ist. Dieser Datenträger, der irgend ein Datenträger sein kann, wie er vorgängig beschrieben worden ist und der irgend einen Code enthalten kann, der vorgängig erwähnt worden ist, kann in der Anlieferstation angebracht worden sein oder er kann dauernd am Wäschestück enthalten sein. Er ist für die Funktion der Einrichtung nicht unbedingt erforderlich. Jedenfalls dann nicht, wenn der Transportbügel 12 selbst einen Datenträger 14 aufweist, der beispielsweise ein Chip, ein magnetischer oder optischer Datenträger sein kann, in dem ein Kennungscode 8.2 enthalten ist.

Zur Vereinfachung des Verfahrens kann ebenfalls vorgesehen sein, für verschiedene Behandlungs- und/oder Faltarten Transportbügel mit einem fest zugeordneten Kennungscode in der Aufbügelstation bereit zu halten. Es erfolgt dann dort bei der zweiten Codierstelle lediglich noch eine Zuordnung des Wäschestückes 3 zum Transportbügel.

## Patentansprüche

1. Vorrichtung (1) zum Behandeln von Wäschestücken (3.3), mit einem Zuführförderer (2), mit dem die Wäschestücke der Vorrichtung losweise in einer sortierten, sequentiellen Folge zuführbar sind, mit mehreren Behandlungsstationen (4.1, 4.2, 5), die zum Durchführen von gleichartigen Behandlungsoperationen an den Wäschestücken parallel zueinander angeordnet sind, sowie mit einem Weiterförderer (6), mit dem die an den mehreren Behandlungsstationen behandelten Wäschestücke (3.4) weiterförderbar sind, dadurch gekennzeichnet, dass jeder Behandlungsstation (4.1, 4.2, 5) ein Wäschespeichermittel (7) zugeordnet ist, in welchem die an der entsprechenden Behandlungsstation (4.1, 4.2, 5) behandelten Wäschestücke (3.4) speicherbar und von welchem die Wäschestücke (3.4) dem Weiterförderer (6) zuführbar und übergebbar sind, dass jedem Wäschestück (3.3 3.4) ein Kennungscode (8.1, 8.2) und der Vorrichtung (1) mindestens eine Einrichtung (9, 11) zum Lesen des Kennungscodes zugeordnet sind, und dass eine Steuereinrichtung (10) vorhanden ist, mit welcher die Wäschespeichermittel (7) derart steuerbar sind, dass die behandelten Wäschestücke (3.4) trotz unterschiedlich langen Behandlungszeiten an den einzelnen Behandlungsstationen (4.1, 4.2, 5) losweise dem Weiterförderer (6) übergebbar sind.

2. Vorrichtung nach Anspruch 1, dadurch gekennzeichnet, dass die Behandlungsstationen Wäschefaltautomaten (4.1, 4.2) und/oder manuell bediente Wäschefalttische (5) sind.

3. Vorrichtung nach Anspruch 1 oder 2, dadurch gekennzeichnet, dass die mindestens eine Einrichtung (11) zum Lesen des Kennungscodes dem Zuführförderer (2) zugeordnet ist, womit eine im Kennungscode enthaltene Information lesbar ist, welche festlegt, bei welcher Behandlungsstation (4.1, 4.2, 5) das entsprechende Wäschestück zu behandeln ist.

4. Vorrichtung nach einem der Ansprüche 1 bis 3, dadurch gekennzeichnet, dass der dem Wäschestück (3.3, 3.4) zugeordnete Kennungscode (8.1, 8.2) ein Kennungscode (8.1) ist, der am Wäschestück (3.3, 3.4) selbst angebracht ist, und/oder ein Kennungscode (8.2) ist, der an einem dem Wäschestück (3.3, 3.4) zugeordneten Transportmittel, insbesondere einem Transportbügel (12) angebracht ist.

5. Vorrichtung nach Anspruch 4, dadurch gekennzeichnet, dass der Kennungscode (8.1, 8.2) ein Barcode, Punktcode oder ein anderer Code (13) ist und auf einem Chip oder einem anderen Datenträger (14) enthalten ist.

6. Vorrichtung nach einem der Ansprüche 1 bis 6, dadurch gekennzeichnet, dass jedes Wäschespeichermittel ein Zwischenförderer (7) ist, der sich von einem Ausgang (15) einer der Bearbeitungsstationen (4.1, 4.2, 5) zum Weiterförderer (6) erstreckt.

7. Wäschebehandlungsanlage mit mehreren Arbeitsstationen (16, 17.1, 18, 19, 17.2, 20, 21, 1, 22) zum Durchführen unterschiedlicher Behandlungen an Wäschestücken (3.1, 3.2, 3.3, 3.4), welche längs einem Fördersystem (23, 24, 6) die einzelnen Arbeitsstationen in einer sequentiellen Folge durchlaufen, mit einem zentralen Rechnersystem (25) zum Steuern der Anlage, dadurch gekennzeichnet, dass mindestens eine der Arbeitsstationen eine Vorrichtung (1) nach einem der Ansprüche 1 bis 6 ist, dass der Zuführförderer (2) und der Weiterförderer (6) Teile des Fördersystemes (23, 24, 6) sind und dass die Steuereinrichtung (10) ein Teil des zentralen Rechnersystemes (25) ist.

8. Verfahren zum Behandeln von Wäschestücken in einer Vorrichtung (1) mit mehreren parallel zueinander angeordneten Behandlungsstationen (4.1, 4.2, 5) an denen gleichartige Behandlungsoperationen an den Wäschestücken (3.3) durchgeführt werden, wobei die Wäschestücke (3.3) der Vorrichtung losweise sortiert in einer sequentiellen Folge zugeführt werden und nach dem Durchführen der Behandlungsoperation an den mehreren Behandlungsstationen (4.1, 4.2, 5) in einer sequentiellen Folge weitergefördert werden, dadurch gekennzeichnet, dass die Wäschestücke (3.4) vor der Weiterförderung in einem jeder Behandlungsstation (4.1, 4.2, 5) zugeordneten Wäschespeichermittel (7) zwischengespeichert werden um unterschiedlich lange Ausführungszeiten der Behandlungsoperation an den einzelnen Behandlungsstationen (4.1, 4.2, 5) zu kompensieren, und dass die Wäschestücke dann wieder losweise sortiert weitergefördert werden.

9. Verfahren nach Anspruch 8, dadurch gekennzeichnet, dass die Wäschespeichermittel (7) nach dem FIFO (first in - first out) Prinzip arbeiten.

10. Verfahren nach Anspruch 8 oder 9, dadurch gekennzeichnet, dass jedem Wäschestück (3.3, 3.4) ein Kennungscode (8.1, 8.2) zugeordnet wird, dass Rechenmittel (10, 25) eingesetzt werden, womit anhand des Kennungscodes (8.1, 8.2) die Lage von jedem Wäschestück (3.4) in jedem Wäschespeichermittel (7) festgehalten wird, und dass mit der Ausgabe eines Loses von Wäschestücken (3.4) aus den Wäschespeichermitteln (7) erst dann begonnen wird, wenn sichergestellt ist, dass alle Wäschestücke (3.4) des Loses nacheinander aus den Wäschespeichermitteln ausgegeben werden können und das vorherige Los vollständig abgearbeitet worden ist.
